# EUROPÄISCHE PATENTSCHRIFT

(11) **EP 1 715 395 B1**
(45) Veröffentlichungstag und Bekanntmachung des Hinweises auf die Patenterteilung: **11.06.2008**
(21) Anmeldenummer: 05008877.2
(22) Anmeldetag: 22.04.2005
(51) Int. Cl.: G05B 19/042, G05B 19/418

(54) **Vorrichtung für sicheren Fernzugriff**
System for secure remote access
Système pour un accès à distance en sécurité

(43) Veröffentlichungstag der Anmeldung: 25.10.2006
(73) Patentinhaber: TRUMPF Laser GmbH + Co. KG, 78713 Schramberg (DE)
(72) Erfinder: Thieringer, Rainer, 78662 Bösingen (DE)
(74) Vertreter: Kohler Schmid Möbus

(56) Entgegenhaltungen:
- US-A1- 2004 088 448
- US-A1- 2004 255 017
- US-B1- 6 560 235
- ROONEY S ET AL: "THE TEMPEST: A FRAMEWORK FOR SAFE, RESOURCE-ASSURED, PROGRAMMABLE NETWORKS" IEEE COMMUNICATIONS MAGAZINE, IEEE SERVICE CENTER. PISCATAWAY, N.J, US, Bd. 36, Nr. 10, Oktober 1998 (1998-10), Seiten 42-53, XP000785910 ISSN: 0163-6804
- KAMOUSKOS S: "Supporting nomadic users within virtual private networks" SERVICE PORTABILITY AND VIRTUAL CUSTOMER ENVIRONMENTS, 2000 IEEE SAN FRANCISCO, CA, USA 1 DEC. 2000, PISCATAWAY, NJ, USA,IEEE, US, 2001, Seiten 128-133, XP010551474 ISBN: 0-7803-7133-X

## Beschreibung

Die vorliegende Erfindung betrifft ein System zur Fernkommunikation zwischen einem Service-PC und einer Maschinensteuerung, mit mindestens einem zentralen Computer, der durch eine Firewall geschützt ist, wobei der Service-PC mit dem zentralen Computer über eine Verbindung verbindbar ist, sowie ein Fernkommunikationsverfahren zwischen einem Service-PC und einer Maschinensteuerung, wobei ein Benutzer eine Verbindung zwischen seinem Service-PC und einem durch eine Firewall geschützten zentralen Computer herstellt.

Ein derartiges Fernkommunikationssystem und -verfahren sind durch US 2004/255017 A1 bekannt geworden.

Die globale Ausrichtung heutiger Maschinenbauunternehmen mit weltweit ansässigen Kunden und Maschinenbetreibern macht es erforderlich, eine Wartung, Fehlerdiagnose und ggf. auch eine Reparatur der ausgelieferten Maschinen, Anlagen und Geräte (im Folgenden unter dem Begriff "Maschinen" zusammengefasst) nicht nur direkt vor Ort, sondern auch per Fernzugriff leisten zu können. Während dazu bisher üblicherweise eine Direkteinwahl von einem Service-PC aus über ein analoges Modem oder eine ISDN-Verbindung erfolgte, so steigt heute die Nachfrage nach dem Einsatz einer modernen Kommunikationstechnik, dem so genannten VPN ("Virtual Private Network"), die einen verschlüsselten Fernzugriff über das Internet ermöglicht. Vor allem große Unternehmen bauen ihre Firewall-Gateways zu VPN-Portalen aus, über welche die Zulieferer und Anlagenbauer Fernzugriff auf ausgelieferte Maschinen erhalten. Damit verbunden wird von den Zulieferern und Anlagenbauem gefordert, ihre den Maschinen und Anlagen beigestellten lokalen Modems und ISDN-Zugänge zu entfernen. Darüber hinaus definieren einige Unternehmen inzwischen Zugriffsvorgaben, die nicht standardisiert sind. Neben VPN werden auch verschiedenste andere Authentifizierungsverfahren -z.B. Caller-ID, Preshared Keys, One Time Password oder SecureID - oder Spezial-Hardware eingesetzt.

Ein Fernzugriff über VPN stellt hohe Anforderungen an die Infrastruktur und Sicherheit. Besonders problematisch ist die Tatsache, dass der Fernzugriff über VPN abhängig ist von der beim Maschinenbetreiber eingesetzten Technik. Eine einfache Universallösung auf der Seite des Serviceleistenden wird durch den Umstand behindert, dass es bisher nicht möglich ist, verschiedene VPN Client-Software (z.B. CISCO VPN Client und Checkpoint VPN Client) gleichzeitig innerhalb eines Betriebssystems, d.h. beispielsweise gleichzeitig auf dem Notebook eines Service-Mitarbeiters, einzusetzen. Je nach der beim Maschinenbetreiber eingesetzten VPN-Lösung ist ein unterschiedlicher VPN-Client und damit ein eigenständiger Rechner erforderlich. Entsprechende Probleme ergeben sich, wenn durch den Maschinenbetreiber noch andere Zugriffsvorgaben und Einwahltechnologien, z.B. RAS über ISDN oder über Modem, gefordert werden. Weitere Probleme ergeben sich, wenn sensible (Zugangs-)Daten des Maschinenbetreibers auf PCs oder Notebooks von Servicetechnikern lokal gespeichert sind. Diese Daten sind nur ungenügend gegen Angriffe aus dem Internet oder bei Diebstahl eines PCs geschützt.

Bei dem aus US 2004/255017 A1 bekannten Fernkommunikationssystem sind ein Gerätenetzwerk mit mehreren Feldgeräten und ein Firmen-Intranet mit mehreren Personalcomputern miteinander über einen Proxyserver verbunden. Bei den Feldgeräten kann es sich um beliebige Geräte zum Beobachten, zum Messen, zum Steuern und/oder Regeln verschiedenster physikalischer Größen in unterschiedlichen technischen Prozessen handeln. Im Firmen-Intranet haben die an das lokale Netz angeschlossenen Personalcomputer Zugang zu einem Modem, welches über ein Telekommunikationsnetz mit einem Modem des Gerätenetzwerks verbindbar ist. Wird in den Personalcomputern jeweils ein Datenfernübertragungszugriff eingerichtet, kann von den Personalcomputern aus jeweils ein Zugriff auf die Feldgeräte erfolgen.

Demgegenüber ist es die Aufgabe der vorliegenden Erfindung, bei einem System für den Fernzugriff auf Maschinen-, Geräte- oder Anlagensteuerungen (im Folgenden unter dem Begriff "Maschinensteuerung" zusammengefasst) und bei einem Verfahren der jeweils eingangs genannten Art die Übertragung von Viren zu verhindern und den Zugriff mittels verschiedenster Einwahl- und Verschlüsselungstechnologien zu ermöglichen.

Diese Aufgabe wird bei dem eingangs genannten Fernkommunikationssystem erfindungsgemäß dadurch gelöst, dass der zentrale Computer mehrere nebeneinander lauffähige virtuelle Rechner aufweist, welche jeweils für gleiche oder unterschiedliche Arten von Kommunikationsverbindungen mit Maschinensteuerungen eingerichtet sind, wobei der zentrale Computer mit einer Maschinensteuerung über denjenigen virtuellen Rechner, der für die dieser Maschinensteuerung zugeordnete Kommunikationsverbindung eingerichtet ist, verbindbar ist..

Das erfindungsgemäße Fernkommunikations-System oder -Portal ermöglicht eine zentrale Installation von Kundendaten und Zugriffstechnologien für den Fernzugriff auf Maschinen. Auf den virtuellen Rechnern können heterogene Einwahltechnologien nebeneinander installiert werden. Außerdem bietet diese Technologie einen hohen Sicherheitsstandard für die sensiblen Kundendaten (Einwahlnummern, Passwörter, ...), da nur bestimmte Personen Zugriff auf die Struktur hinter der Firewall haben. Auf dem geschützten zentralen Rechner bzw. im geschützten Netzwerk befinden sich verschiedene Server für Datenhaltung, Authentifizierung, Lizenzen, Netzwerkdienste und die Firewall.

Vorzugsweise erlaubt die Verbindung, über die der Service-PC mit dem zentralen Computer oder Computer-Verbund verbindbar ist, nur die Übertragung von Pixel-Informationen, Maus- und Tastaturbewegungen, so dass eine Übertragung von Viren zwischen dem Service-PC und dem zentralen Computer verhindert wird. Besonders bevorzugt erfolgt die Verbindung zwischen dem Service-PC und dem zentralen Computer oder Computer-Verbund über Remote-Desktop-Programme, z.B. über RDP oder VNC und insbesondere mittels Windows Terminal Services. Dazu weist der zentrale Computer vorzugsweise mindestens einen Terminal Server auf. Das Fernkommunikations-System ist beliebig skalierbar, so dass eine nur durch die Anzahl gleichzeitig möglicher Kommunikationsverbindungen begrenzte Menge von Fernzugriffs-Sitzungen durchgeführt werden kann. Authorisierte Personen können auf dem Terminal Server eine Terminal Session starten und bekommen dadurch einen virtuellen Bildschirm des Terminal Servers in der geschützten Zone. Der Benutzer wählt eine Maschine anhand ihrer Equipmentnummer aus einer Liste aus, und mit diesen Daten wird auf dem Terminal Server ein virtueller Rechner ("Virtual Machine") gebootet, der für den ausgewählten Maschinenbetreiber (Kunden) oder für eine Kundengruppe eingerichtet ist. Von diesem virtuellen Rechner aus wird eine Verbindung über die vom Maschinenbetreiber vorgegebene Einwahltechnik durchgeführt. Es können dadurch die verschiedensten Einwahltechniken zum Kunden realisiert werden, z.B. eine VPN-Verbindung, pcAnywhere über einen DOS-Rechner, pcAnywhere über ein beliebiges Windows, Direkteinwahl mit pcAnywhere, RAS-Verbindung über TCP/IP oder auch exotische Verbindungen, wie z.B. über Linux. Alle virtuellen Rechner können einfach durch Kopieren von Dateien archiviert werden, so dass ein Service-Einsatz immer mit einem speziell für einen Kunden eingerichteten virtuellen PC durchgeführt werden kann. Auf das erfindungsgemäße System kann auch Fremdfirmen Zugriff erteilt werden, so dass ein Unterlieferant Einwahlberechtigungen zu bestimmten Geräten erhalten kann. Alle Zugriffe auf Geräte können protokolliert werden.

Bevorzugt ist der zentrale Computer über die Firewall an das Intranet des Maschinenherstellers oder eines Servicebetreibers angeschlossen, welches über eine weitere Firewall mit dem Internet verbunden ist. Der authentifizierte Benutzer muss sich nicht unmittelbar im Intranet des Maschinenherstellers oder Servicebetreibers befinden, sondern kann z.B. über eine VPN-Verbindung über ISDN oder das Internet von einem beliebigen Service-PC aus im Intranet angemeldet sein. Es besteht keine direkte Netzwerkverbindung zwischen dem Service-PC des Benutzers und dem Kundennetzwerk, sondern nur zwischen dem geschützten zentralen Rechner und der Maschinensteuerung einer beim Kunden stehenden Maschine.

Die Zuordnung von Maschinensteuerungen zu ihren jeweiligen Kommunikationsverbindungen ist beispielsweise im zentralen Computer oder einer daran angeschlossenen Datenbank gespeichert.

Vorzugsweise erfolgt die Kommunikationsverbindung zwischen dem zentralen Computer und der jeweiligen Maschinesteuerung sowie die Verbindung zwischen dem Service-PC und dem zentralen Computer über das Internet, insbesondere jeweils über eine VPN-Verbindung.

Bevorzugt weisen die virtuellen Rechner des zentralen Computers unterschiedliche Betriebssysteme und/oder unterschiedliche Anwendungsprogramme und/oder unterschiedliche Virenschutzprogramme auf. Dabei dienen eines oder mehrere der Anwendungsprogramme dazu, die Kommunikationsverbindung zwischen dem zentralen Computer und der Maschinesteuerung herzustellen.

Die oben genannte Aufgabe wird bei dem eingangs genannten Fernkommunikationsverfahren erfindungsgemäß dadurch gelöst, dass die Verbindung nur die Übertragung von Pixel-Informationen, Maus- und Tastaturbewegungen erlaubt und dass der zentrale Computer anhand gespeicherter Daten eine der gewünschten Maschinensteuerung zugeordnete Kommunikationsverbindung ermittelt und denjenigen seiner mehreren virtuellen Rechner, der für diese Kommunikationsverbindung eingerichtet ist, für die Verbindung mit der Maschinensteuerung auswählt und diesen virtuellen Rechner startet.

Vorzugsweise führt der Benutzer über die Kommunikationsverbindung Funktionen der Maschinensteuerung aus und/oder tauscht Dateien zwischen der Maschinensteuerung und dem zentralen Computer aus.

Weitere Vorteile der Erfindung ergeben sich aus der Beschreibung und den Zeichnungen. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch den prinzipiellen Aufbau des erfindungsgemäßen Fernkommunikationssystems zwischen einem Service-PC und einer Maschinensteuerung unter Zwischenschaltung eines zentralen Rechners; und
- Fig. 2: das Fernkommunikationssystem von Fig. 1, wobei der zentrale Rechner an das Intranet des Maschinenbauers und die Maschinensteuerung an das Intranet des Maschinenbetreibers angeschlossen ist.

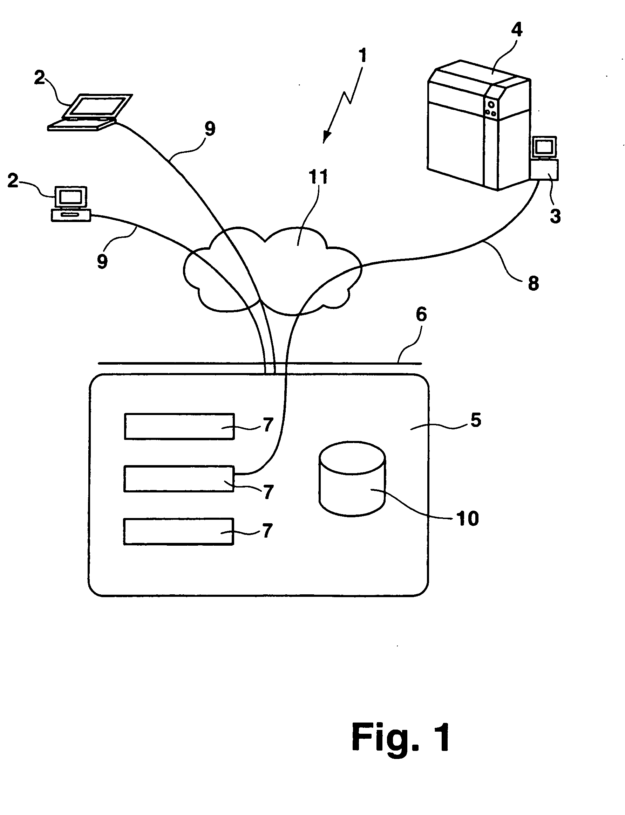

Das in **Fig. 1** gezeigte System **1** dient zur Fernkommunikation zwischen einem Service-PC **2** und der Maschinensteuerung **3** einer Maschine bzw. eines Geräts **4** (z.B. Werkzeugmaschine oder Lasergerät), um eine Wartung, Fehlerdiagnose und gegebenenfalls eine Reparatur der Maschine **4** per Fernzugriff zu ermöglichen.

Das System 1 umfasst mindestens einen zentralen Computer **5,** der durch eine Firewall **6** nach außen geschützt ist und mehrere nebeneinander lauffähige virtuelle Rechner ("Virtual Machine") **7** aufweist. Diese einzelnen virtuellen Rechner 7 sind, wie unten noch näher ausgeführt, jeweils für gleiche oder unterschiedliche Arten von Kommunikationsverbindungen **8** mit Maschinensteuerungen eingerichtet. Der Service-PC 2 ist mit dem zentralen Computer (oder Computer-Verbund) 5 über eine Verbindung **9**, welche insbesondere nur die Übertragung von Pixel-Informationen, Maus- und Tastaturbewegungen erlaubt, verbunden. Der zentrale Computer 5 ist mit der Maschinensteuerung 3 über denjenigen virtuellen Rechner 7, der für die dieser Maschinensteuerung 3 zugeordnete Kommunikationsverbindung 8 eingerichtet ist, verbunden. Die Zuordnung von Maschinensteuerungen 3 zu ihren jeweiligen Kommunikationsverbindungen 8 ist in einer Datenbank **10** des zentralen Computers 5 gespeichert. Die virtuellen Rechner 7 des zentralen Computers 5 weisen unterschiedliche Betriebssysteme mit unterschiedlichen Anwendungsprogrammen auf, welche die Kommunikationsverbindung 8 zwischen dem zentralen Computer 5 und unterschiedlichen Maschinensteuerungen herstellen. Die Verbindung 9 zwischen Service-PC 2 und zentralem Computer 5 sowie die Verbindung 8 zwischen dem zentralen Computer 5 und der jeweiligen Maschinensteuerung 3 erfolgen über das Internet **11,** und zwar jeweils über eine VPN ("Virtual Private Network")-Verbindung.

Für einen Fernzugriff auf die Maschinensteuerung 3 einer bestimmten Maschine stellt ein Benutzer zunächst die Verbindung 9 zwischen seinem Service-PC 2 und dem durch die Firewall 6 geschützten zentralen Computer 7 her. Anhand der in der Datenbank 10 gespeicherten Daten ermittelt der zentrale Computer 4 die der gewünschten Maschinensteuerung 3 zugeordnete Kommunikationsverbindung 8 und wählt denjenigen virtuellen Rechner 7, der für diese Kommunikationsverbindung 8 eingerichtet ist, für die Verbindung mit der Maschinensteuerung 3 aus und startet diesen virtuellen Rechner 5. Über die Kommunikationsverbindung 8 führt der Benutzer Funktionen der Maschinensteuerung 3 aus und/oder tauscht Dateien zwischen der Maschinensteuerung 3 und dem zentralen Computer 4 aus, wobei die Maschinensteuerung 3 einer beim Kunden stehenden Maschine nicht direkt mit dem Service-PC 2, sondern nur über den geschützten zentralen Rechner 5 verbunden ist.

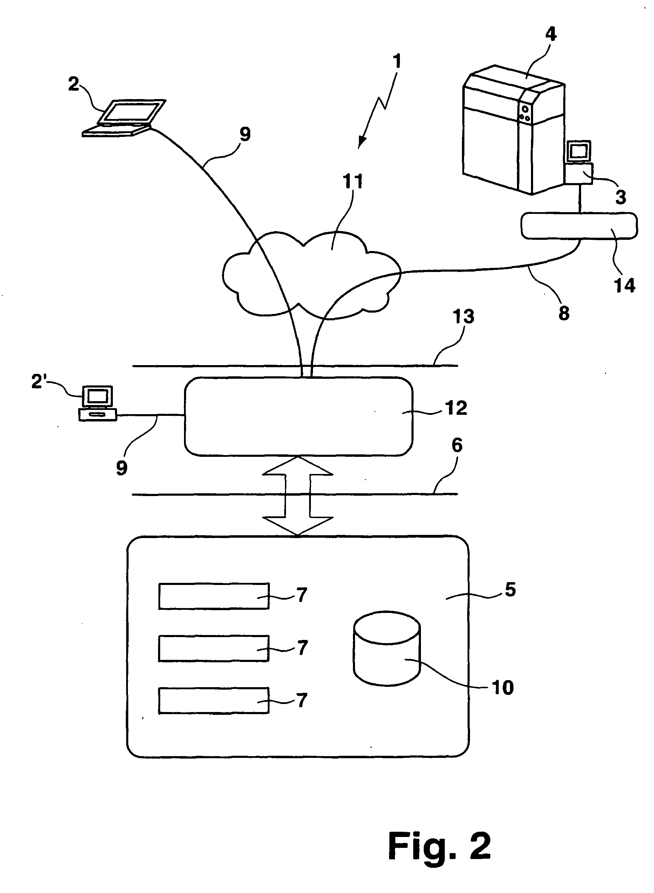

In **Fig. 2** ist der zentrale Rechner 5 über die Firewall 6 an das Intranet (Hausnetz) **12** des Maschinenherstellers angeschlossen, welches über eine weitere Firewall **13** mit dem Internet 11 verbunden ist. Außerdem ist die Maschinensteuerung 3 an das Intranet (Hausnetz) **14** des Maschinenbetreibers angeschlossen, welches ebenfalls mit dem Internet 11 verbunden ist. Der zentrale Rechner 5 ist ein geschützter LAN Bereich (VLAN), welcher über die Firewall 6 vom Intranet 12 des Maschinenherstellers abgetrennt ist. Nur bestimmte Personen haben Zugriff auf die Struktur hinter der Firewall 6. Der Service-PC 2, 2' ist entweder direkt über das Intranet 12 des Maschinenherstellers oder über das Internet 11 mit dem zentralen Rechner 5 verbunden.

## Patentansprüche

1. System (1) zur Fernkommunikation zwischen einem Service-PC (2) und einer Maschinensteuerung (3), mit mindestens einem zentralen Computer (5), der durch eine Firewall (6) geschützt ist, wobei der Service-PC (2) mit dem zentralen Computer (5) über eine Verbindung (9) verbindbar ist,
**dadurch gekennzeichnet,**
**dass** der zentrale Computer (5) mehrere nebeneinander lauffähige virtuelle Rechner (7) aufweist, welche jeweils für gleiche oder unterschiedliche Arten von Kommunikationsverbindungen (8) mit Maschinensteuerungen eingerichtet sind, wobei der zentrale Computer (5) mit einer Maschinensteuerung (3) über denjenigen virtuellen Rechner (7), der für die dieser Maschinensteuerung (3) zugeordnete Kommunikationsverbindung (8) eingerichtet ist, verbindbar ist.

2. System nach Anspruch 1, **dadurch gekennzeichnet, dass** die Verbindung (9) zwischen dem Service-PC (2) und dem zentralen Computer (5) nur die Übertragung von Pixel-Informationen, Maus- und Tastaturbewegungen erlaubt.

3. System nach Anspruch 1 oder 2, **dadurch gekennzeichnet, dass** die Verbindung (9) zwischen dem Service-PC (2) und dem zentralen Computer (5) mittels RDP, insbesondere mittels Windows Terminal Services, erfolgt.

4. System nach einem der vorhergehenden Ansprüche, **dadurch gekennzeichnet, dass** der zentrale Computer (5) über die Firewall (6) an das Intranet (12) des Maschinenherstellers oder eines Servicebetreibers angeschlossen ist, welches über eine weitere Firewall (13) mit dem Internet (11) verbunden ist.

5. System nach einem der vorhergehenden Ansprüche, **dadurch gekennzeichnet, dass** die Zuordnung von Maschinensteuerungen (3) zu ihren jeweiligen Kommunikationsverbindungen (8) im zentralen Computer (5) oder einer daran angeschlossenen Datenbank (10) gespeichert ist.

6. System nach einem der vorhergehenden Ansprüche, **dadurch gekennzeichnet, dass** die Kommunikationsverbindung (8) zwischen dem zentralen Computer (5) und der jeweiligen Maschinesteuerung (3) über das Internet (11), insbesondere über eine VPN-Verbindung, erfolgt.

7. System nach einem der vorhergehenden Ansprüche, **dadurch gekennzeichnet, dass** die Verbindung (9) zwischen dem Service-PC (2) und dem zentralen Computer (5) über das Intranet (12) des Maschinenherstellers oder eines Servicebetreibers erfolgt.

8. System nach einem der vorhergehenden Ansprüche, **dadurch gekennzeichnet, dass** die Verbindung (9) zwischen dem Service-PC (2) und dem zentralen Computer (5) über das Internet (11), insbesondere über eine VPN-Verbindung, erfolgt.

9. System nach einem der vorhergehenden Ansprüche, **dadurch gekennzeichnet, dass** die virtuellen Rechner (7) des zentralen Computers (5) unterschiedliche Betriebssysteme und/oder unterschiedliche Anwendungsprogramme und/oder unterschiedliche Virenschutzprogramme aufweisen.

10. System nach Anspruch 9, **dadurch gekennzeichnet, dass** eines oder mehrere der Anwendungsprogramme dazu dienen, die Kommunikationsverbindung (8) zwischen dem zentralen Computer (5) und der Maschinensteuerung (3) herzustellen.

11. Fernkommunikationsverfahren zwischen einem Service-PC (2) und einer Maschinensteuerung (3), insbesondere in einem System (1) nach einem der vorhergehenden Ansprüche, wobei ein Benutzer eine Verbindung (9) zwischen seinem Service-PC (2) und einem durch eine Firewall (6) geschützten zentralen Computer (5) herstellt
**dadurch** gekenntzeichnet,
dass die Verbindung (9) nur die Übertragung von Pixel-Informationen, Maus- und Tastaturbewegungen erlaubt und dass der zentrale Computer (5) anhand gespeicherter Daten eine der gewünschten Maschinensteuerung (3) zugeordnete Kommunikationsverbindung (8) ermittelt und denjenigen seiner mehreren virtuellen Rechner (7), der für diese Kommunikationsverbindung (8) eingerichtet ist, für die Verbindung mit der Maschinensteuerung (3) auswählt und diesen virtuellen Rechner (7) startet.

12. Fernkommunikationsverfahren nach Anspruch 11, **dadurch gekennzeichnet, dass** der Benutzer über die Kommunikationsverbindung (8) Funktionen der Maschinensteuerung (3) ausführt und/oder Dateien zwischen der Maschinensteuerung (3) und dem zentralen Computer (5) austauscht.

## Claims

1. System (1) for telecommunication between a service PC (2) and a machine control (3), comprising at least one central computer (5) which is protected by a firewall (6), the service PC (2) being connectable to the central computer (5) *via* a connection (9),
**characterised in that**
the central computer (5) has a plurality of virtual machines (7) capable of running in parallel which are each equipped for identical or different types of communications connections (8) to machine controls, the central computer (5) being connectable to a machine control (3) *via* that virtual machine (7) which is equipped for the communications connection (8) allocated to that machine control (3).

2. System according to claim 1, **characterised in that** the connection (9) between the service PC (2) and the central computer (5) permits only the transmission of pixel information and mouse and keyboard movements.

3. System according to claim 1 or 2, **characterised in that** the connection (9) between the service PC (2) and the central computer (5) is effected by means of RDP, especially by means of Windows Terminal Services.

4. System according to any one of the preceding claims, **characterised in that** the central computer (5) is connected *via* the firewall (6) to the intranet (12) of the machine manufacturer or of a service operator, which intranet (12) is connected *via* a further firewall (13) to the Internet (11).

5. System according to any one of the preceding claims, **characterised in that** the allocation of machine controls (3) to their respective communications connections (8) is stored in the central computer (5) or in a database (10) connected thereto.

6. System according to any one of the preceding claims, **characterised in that** the communications connection (8) between the central computer (5) and the respective machine control (3) is effected *via* the Internet (11), especially *via* a VPN connection.

7. System according to any one of the preceding claims, **characterised in that** the connection (9) between the service PC (2) and the central computer (5) is effected *via* the intranet (12) of the machine manufacturer or of a service operator.

8. System according to any one of the preceding claims, **characterised in that** the connection (9) between the service PC (2) and the central computer (5) is effected *via* the Internet (11), especially *via* a VPN connection.

9. System according to any one of the preceding claims, **characterised in that** the virtual machines (7) of the central computer (5) have differing operating systems and/or differing applications programs and/or differing virus protection programs.

10. System according to claim 9, **characterised in that** one or more of the applications programs are used to establish the communications connection (8) between the central computer (5) and the machine control (3).

11. Telecommunications method between a service PC (2) and a machine control (3), especially in a system (1) according to any one of the preceding claims, wherein a user establishes a connection (9) between his service PC (2) and a central computer (5) which is protected by a firewall (6),
**characterised in that**
the connection (9) permits only the transmission of pixel information and mouse and keyboard movements, and the central computer (5) identifies on the basis of stored data a communications connection (8) allocated to the desired machine control (3) and selects for the connection to the machine control (3) that one of its multiple virtual machines (7) which is equipped for that communications connection (8) and starts that virtual machine (7).

12. Telecommunications method according to claim 11, **characterised in that** the user executes functions of the machine control (3) and/or exchanges files between the machine control (3) and the central computer (5) *via* the communications connection (8).

## Revendications

1. Système (1) de communication à distance entre un PC de service (2) et une commande de machine (3), comprenant au moins un ordinateur central (5). protégé par un pare-feu (6), le PC de service (2) pouvant être relié à l'ordinateur central (5) par l'intermédiaire d'une connexion (9),
**caractérisé en ce que**
l'ordinateur central (5) comprend plusieurs ordinateurs (7) virtuels utilisables en même temps, lesquels sont conçus respectivement pour les mêmes types ou différents types de connexions de communication (8) avec des commandes de machine, l'ordinateur central (5) pouvant être relié à une commande de machine (3) par l'intermédiaire de l'ordinateur virtuel (7) qui est conçu pour la connexion de communication (8) associée à cette commande de machine (3).

2. Système selon la revendication 1, **caractérisé en ce que** la connexion (9) entre le PC de service (2) et l'ordinateur central (5) ne permet que la transmission d' informations de pixels, de déplacements de souris et au clavier.

3. Système selon la revendication 1 ou 2, **caractérisé en ce que** la connexion (9) entre le PC de service (2) et l'ordinateur central (5) s'effectue au moyen de RDP, en particulier au moyen de Windows Terminal Services.

4. Système selon l'une quelconque des revendications précédentes, **caractérisé en ce que** l'ordinateur central (5) est raccordé par le pare-feu (6) à l'Intranet (12) du fabricant de machine ou d'un opérateur de service, lequel est connecté à Internet (11) par un autre pare-feu (13).

5. Système selon l'une quelconque des revendications précédentes, **caractérisé en ce que** l'association des commandes de machine (3) à leurs connexions respectives de communication (8) dans l'ordinateur central (5), ou à une base de données (10) qui y est raccordée est mémorisée.

6. Système selon l'une quelconque des revendications précédentes, **caractérisé en ce que** la connexion de communication (8) entre l'ordinateur central (5) et la commande de machine respective (3) s'effectue par l'Internet (11), en particulier par une connexion VPN.

7. Système selon l'une quelconque des revendications précédentes, **caractérisé en ce que** la connexion (9) entre le PC de service (2) et l'ordinateur central (5) s'effectue via l'Intranet (12) du fabricant de machine ou d'un opérateur de service.

8. Système selon l'une quelconque des revendications précédentes, **caractérisé en ce que** la connexion (9) entre le PC de service (2) et l'ordinateur central (5) s'effectue par l'Internet (11), en particulier par une connexion VPN.

9. Système selon l'une quelconque des revendications précédentes, **caractérisé en ce que** les ordinateurs virtuels (7) de l'ordinateur central (5) comportent différents systèmes d'exploitation et/ou différents programmes d'application et/ou différents programmes antivirus.

10. Système selon la revendication 9, **caractérisé en ce que** un ou plusieurs des programmes d'application servent à établir la connexion de communication (8) entre l'ordinateur central (5) et la commande de machine (3).

11. Procédé de communication à distance entre un PC de service (2) et une commande de machine (3), en particulier dans un système (1) selon l'une quelconque des revendications précédentes, un utilisateur établissant une connexion (9) entre son PC de service (2) et un ordinateur central (5) protégé par un pare-feu (6),
**caractérisé en ce que**
la connexion (9) ne permet que la transmission d'informations de pixels, de déplacements de souris et au clavier, et **en ce que** l'ordinateur central (5) détermine à l'aide des données mémorisées une connexion de communication (8) associée à la commande de machine souhaitée (3) et, pour la connexion avec la commande de machine (3), choisit parmi ses ordinateurs virtuels (7) celui qui est conçu pour cette connexion de communication (8), et démarre cet ordinateur virtuel (7).

12. Procédé de communication à distance selon la revendication 11, **caractérisé en ce que** l'utilisateur exécute par la connexion de communication (8) des fonctions de la commande de machine (3) et/ou échange des fichiers entre la commande de machine (3) et l'ordinateur central (5).
